# EUROPEAN PATENT APPLICATION

(11) **EP 0 631 355 A1**
(43) Date of publication of application: **28.12.1994**
(21) Application number: 94109720.6
(22) Date of filing: 23.06.1994
(51) Int. Cl.: H01S 3/093

(54) **Solid-state laser device**

(30) Priority: 23.06.1993 JP 151806/93
(71) Applicant: MITSUI PETROCHEMICAL INDUSTRIES, LTD., Tokyo (JP)
(72) Inventor: Kojima, Minoru, c/o MITSUI PETROCHEM. IND., LTD., Sodegaura-shi, Chiba (JP); Uehara, Michito, c/o MITSUI PETROCHEM. IND., LTD., Sodegaura-shi, Chiba (JP); Igarashi, Koichi, c/o MITSUI PETROCHEM. IND., LTD., Sodegaura-shi, Chiba (JP)
(74) Representative: Füchsle, Klaus, Dipl.-Ing.

(57) **Abstract**

A solid-state laser device is described comprising a resonator body (1), an irradiating lamp (3) installed in the cavity of the resonator body (1), and a laser medium (4) also installed in the cavity. The laser medium (4) is excited by the light from the irradiating lamp (3). The inner wall surface (2) of the cavity is a rough surface for reflecting the light emanating from the irradiating lamp (3). The maximum height of the rough surface is in excess of 3 µm.

## Description

### BACKGROUND OF THE INVENTION

A solid-state laser device using a laser medium such as a YAG laser or glass laser has a reflective cylinder in which an irradiating lamp is made to irradiate light. The light is reflected by the internal wall surface of the reflective cylinder and caused to fall as irradiating light on the laser medium, thus inducing laser oscillation. The inner surface of the reflective cylinder assumes the form of an ellipse in a cross section taken perpendicular to the direction of axis. It is common practice to fabricate the inner wall surface out of a specular metal surface. In this structure, the laser medium and the irradiating lamp are disposed at the foci of the ellipse to enhance the efficiency of light collected onto the laser medium.

In the structure described above, the reflecting surface is elliptical in cross section, and the irradiating light is focused at the foci of the ellipse. Therefore, the central portion of the laser medium is strongly excited but the outer portion of the medium is not sufficiently excited. Consequently, it has been pointed out that the laser excitation intensity has a nonuniform distribution.

Also, in the above-described structure, a part of irradiating light emitted by the irradiating lamp which is radiated opposite direction of the laser medium cannot reach the laser medium because of specular reflection. It has been pointed out, therefore, that the excitation efficiency is lowered.

Furthermore, in the structure described above, if only one irradiating lamp is used, then it is only necessary that the cross section assume the form of a simple ellipse. However, if two irradiating lamps are employed, then a double elliptical shape must be fabricated. If more irradiating lamps are used, a multiple elliptical structure corresponding to the number of the lamps must be built. This complicates the machining of the reflective cylinder. In addition, the irradiating efficiency is deteriorated as the multiplicity is increased.

A technique proposed as a solution to these problems is to fabricate the reflective cylinder either from compacted powdered magnesium oxide or barium sulfate or from a diffusive reflector such as a ceramic so as to make the excitation uniform. For example, in the techniques described in Japanese Patent Laid-Open No. 21873/1993, microscopic irregularities of 0.4S (S is defined in "3.4.2 the standard number sequence of maximum height" of JIS (Japanese Industrial Standards) B0601 or more (that means fiver) are formed on the reflecting surface of a reflective cylinder. Irradiating radiation is made to hit this reflecting surface, so that the radiation is diffused by the uneven surface. This permits the radiation to reach the irradiating lamp. In this way, the irradiating light can be made uniform.

However, the diffusive reflector materials used heretofore are selected from a poor choice of materials such as ceramics and so the degree of freedom given to the material selection is small. Therefore, depending on the used material, the machinability is low, and a sufficient diffuse reflection is not obtained. Also, the machining costs are increased.

### SUMMARY OF THE INVENTION

It is an object of the present invention to provide a solid-state laser device using a diffusive reflector capable of employing a material such as easily machined metals as well as from known materials such as ceramics. It is also an object of the invention to provide device having a high excitation efficiency by aforementioned diffusion reflector.

The above object is achieved by a solid-state laser device comprising: a resonator body having a cavity which has an inner wall surface; an irradiating lamp disposed inside the cavity of the resonator body and emitting irradiating light; and a laser medium disposed inside the cavity and excited by the irradiating light. The inner wall surface is a reflecting surface for reflecting the irradiating light emitted by the irradiating lamp. The reflecting surface is a rough surface having a maximum height R of at least 3 µ m .

A further solid-state laser device according to the invention comprises: a resonator body having a cavity which has an inner wall surface; an irradiating lamp disposed inside the cavity of the resonator body and emitting irradiating light; a laser medium disposed inside the cavity and excited by the irradiating light; a transparent hollow body mounted inside the cavity and having an outer surface, the irradiating lamp and the laser medium being accommodated inside the hollow body; a rough surface having a maximum height exceeding 3 µ m and formed on the outer surface of the hollow body; and a metal layer made of gold or silver and formed on the rough surface.

The maximum height of the reflecting surface should be in excess of 3 µ m . The practical range of the maximum height is between 3 and 200 µ m . The maximum height referred to herein is defined in terms of the "definition and notation of roughness of rough surface" stipulated in JIS B0601. The "3.3.3 standard values of reference length" of the same chapter of JIS gives reference lengths when maximum values are found. The present invention utilizes these reference length values.

The preferred range of the maximum height giving diffuse reflectances exceeding 95 % varies depending on the used material for the bottom layer that is the resonator body. Where the material is brass, the maximum height ranges from 4 to 20 µ m . Where the material is a ceramic, a maximum height exceeding 6 µ m is preferred. Where a ceramic material is used, if the maximum height is too large, then the surface is brittle. Therefore, the practical maximum height is preferably less than about 200 µ m .Where the material is transparent hollow body, a maximum height exeeding 3 µ m is preferred. In this case, the maximum height ranges from 3 to 200 µ m is preferred in the view of strength.

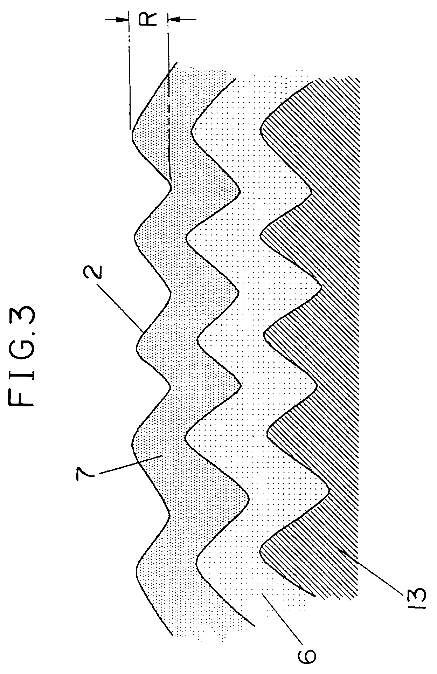

The diffuse reflection referred to herein means that when light is made to impinge on a surface, the light is reflected every direction including the direction of specular reflection. In the present invention, in order to accomplish diffuse reflection, a given roughness is imparted to the reflecting surface. A reflective layer 7 in Fig.3 of gold or silver is formed on the rough surface.

The layer of gold or silver suppresses reflection of certain short wavelengths of light. Specifically, gold suppresses reflection of wavelengths shorter than 500 nm. Silver suppresses reflection of wavelengths shorter than 330 nm. Therefore, wavelengths shorter than the wavelength necessary for the excitation are cut off. This alleviates the thermal effect on the laser medium. Where Nd:YAG is used as the laser medium, the use of gold is suitable. Where Nd:YAG or alexandrite is used, the use of gold is appropriate.

When the reflective layer 7 is made of gold or silver, a buffer layer or intermediate layer 6 is formed on the inner wall surface of the above-described cavity, as shown in Fig. 3. The inner wall surface of the resonator body 1 has a bottom layer 13. Gold or silver is deposited on the top surface of the buffer layer 6 by plating, evaporation, sputtering, application, or other method to form the reflective layer 7.

The resonator body 1 can be made of a ceramic or a metal such as brass. A cavity formed inside the resonator body 1 has an inner wall surface, or a reflecting surface 2. This reflecting surface 2 is roughened to impart a maximum height exceeding 3 µ m to the surface. The layer of gold or silver is formed on this rough surface by evaporation, plating, sputtering, application, or other method. The practical range of the thickness of the layer of gold or silver is between 0.5 µ m and 10 µ m .

Freecutting ceramics are used as the aforementioned ceramic. Examples include Macerite manufactured by Mitsui Mining Co., Ltd. Japan, Macor manufactured by Corning, and Mioceram manufactured by Ryoden Kasei Co., Ltd, Japan. Where these materials are used, machining can be facilitated.

In the above description, the metallic material of the resonator body 1 is brass. Other usable metallic materials include stainless steel, copper, and aluminum. These materials have been used only as materials for specular reflection and have not been regarded as materials for producing diffuse reflection. If the above-described surface-roughening method is used, these materials have sufficient diffuse reflectance for laser oscillation. Sandblasting is available as a method of roughening the bottom layer that is the resonator body. The appropriate grain size for the sandblasting is #30 to #200. The appropriate blasting pressure is 1 to 5 kg.

As an example, the cross section of the cavity comprises two semicircular portions and straight line portions connecting the semicircular portions. Laser rods and irradiating lamps can be arranged alternately inside the cavity to complete a solid-state laser device.

The maximum height referred to herein is indicated by JIS (Japanese Industrial Standards) B0601 which represents surface roughness. To measure surface roughness, Surftest501 that is a surface roughness tester manufactured by Mitsutoyo, Japan, can be used.

As described thus far, in the present invention, diffuse reflector materials are not limited to known materials. High diffuse reflectances can be obtained, using easily machined metal materials as well as ceramics. Hence, a solid-state laser device whose laser medium can be excited uniformly can be provided. Additionally, the laser device has a high excitation efficiency.

Other objects and features of the invention will appear in the course of the description thereof, which follows.

### BRIEF DESCRIPTION OF THE DRAWINGS

Fig. 1 is a perspective view of the resonator body of a solid-state laser device according to the invention;
Fig. 2 is a cross-sectional view of the cavity of the resonator body shown in Fig. 1, illustrating diffuse reflection;
Fig. 3 is an enlarged cross section of a lamination forming the reflecting surface of the resonator body shown in Fig. 1;
Fig. 4 is a graph illustrating the relation of the diffuse reflectance measured by using the integrating sphere shown in Fig.5 to the surface roughness (maximum height) of the reflecting surface;
Fig. 5 is a crosssectional view of an integrating sphere for investigating the diffuse reflectance of a diffuse reflector according to the invention;
Fig. 6 is a crosssectional view of the resonator body of Example 4 of the present invention; and
Fig.7 is a table of diffuse reflectances in the examples and the comparisons based on Fig.4

### DESCRIPTION OF THE PREFERRED EMBODIMENTS

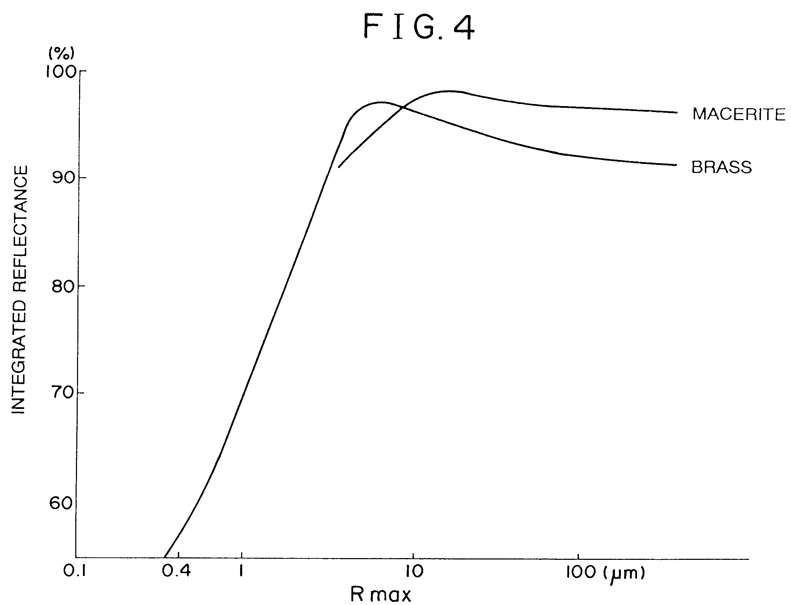

Fig. 4 illustrates the relation of the integrated reflectance, or the diffuse reflectance, of a rectangular piece simulating parts of the inner wall surface 2 of a reflective cylinder, or a resonator body 1, to the surface roughness of the rectangular piece surface when laser light having a wavelength of 800 nm is illuminated, for illustrating the principle of the present invention. The rectangular piece surface has been plated with gold with the thickness of 3 µ m after roughened by sandblasting.

Macerite which is a ceramic is used as one material of the rectangular piece simulating parts of reflective cylinder, or the resonator body 1. Brass is used as another material of the reflective cylinder. As can be seen from the graph, diffuse reflectances of greater than 90 % which are practical values can be obtained in either case if the maximum height is in excess of 3 µ m . In the case of the ceramic, if the maximum height is made too large, then the surface becomes brittle. In consequence, the practicability is deteriorated.

Referring to Fig. 3, a reflective layer 7 made of at least one of gold or silver is formed on the surface of the reflective cylinder. Thus the diffuse reflectance is increased compared with the case in which only a bottom layer 13 exists. An inherent reflectance spectrum intrinsic in the metal affects the diffuse reflectance spectrum. For example, gold can suppress reflection of light of wavelengths shorter than 500 nm. Silver can suppress reflection of light of wavelengths shorter than 330 nm. Therefore, the wavelengths shorter than the wavelength necessary for the excitation are cut off. This can reduce the thermal effects on the laser medium. Where Nd:YAG is used as the laser medium, the use of gold or silver is suitable. Where alexandrite is used, the use of silver is advantageous.

Where a layer of a metal is formed on the surface, if a buffer layer 6 of Ni, Cu, Cr, or Ti is previously formed on the bottom layer 13, then the overlying reflective layer 7 does not readily peel off.

We have found that the maximum height which gives the maximum diffuse reflectance differs depending on the material of the reflector. In particular, in the case of the Macerite that is a ceramic, a diffuse reflectance exceeding 95 % is obtained if the height is in excess of 6 µ m . That is, desired diffuse reflectances can be derived.

In the case of the brass that is a metal material, if the height is in excess of 4 µ m , then the diffuse reflectance is in excess of 95 % . That is, desirable diffuse reflectances can be obtained. In the past, metals have been used as specular reflection materials but have not been used as diffuse reflection materials. However, diffuse reflectances comparable to those of ceramic materials can be obtained by roughening the surface as mentioned above.

Since the reflective cylinder, or the resonator body 1, is constructed as described above, light emitted from an irradiating lamp 3 is reflected diffusively by the diffusive reflecting surface 2. The light illuminates the surface of the laser medium 4 without being focused at certain positions. Consequently, the laser medium 4 can be excited uniformly.

Where a metal is selected as the material of the reflective cylinder, or the resonator body 1, the diffuse reflector which can be easily machined can be fabricated. Some examples of the invention are described in detail below.

### EXAMPLE

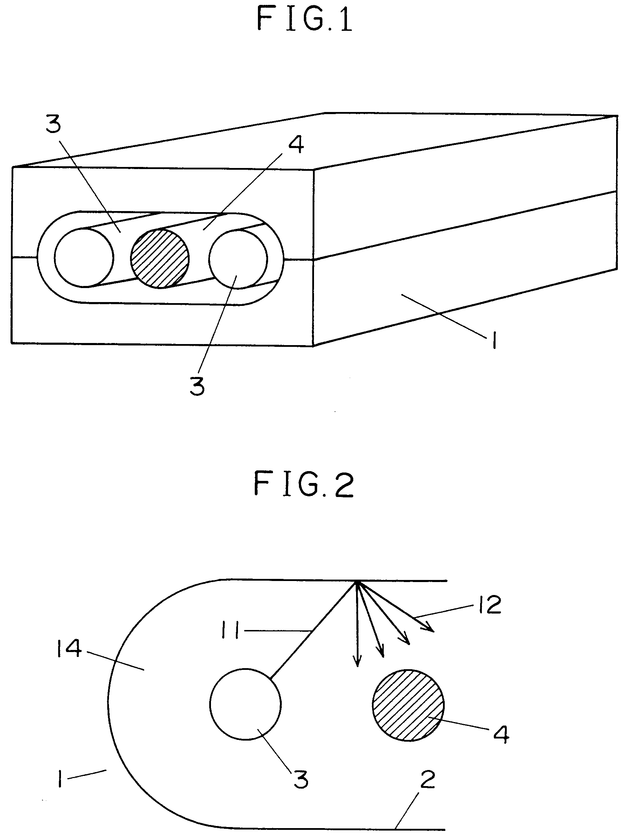

Fig. 2 is a crosssectional view of a solid-state laser device according to the invention. The laser device uses an irradiating lamp 3 that is a xenon-flash lamp. Light 11 emitted by this lamp enters a laser medium 4 directly or via a reflecting surface 2. The laser medium 4 consists of Nd:YAG.

Where the light 11 emitted by the irradiating lamp 3 is reflected by the reflecting surface 2, this surface 2 is made rough to form a diffuse reflecting surface, as shown in Fig. 3. The light 11 is reflected diffusely, i.e., reflected in random directions. The diffused light, indicated by 12, is repeatedly reflected by the reflecting surface 2, whereby the light is diffused further. As a result, the amount of light is made uniform over the whole cross section of the reflective cylinder. In this way, the intensity of the irradiating light illuminating the laser medium 4 has a uniform distribution.

In the present example, the reflective cylinder was made of Macerite and machined into a form as indicated by numeral 1 in Fig. 1. The inner surface was roughened by sandblasting to form the bottom surface 13. A buffer layer 6 made of nickel was formed on the bottom layer 13. The top surface of the buffer layer 6 was plated with gold to form a reflective layer 7.

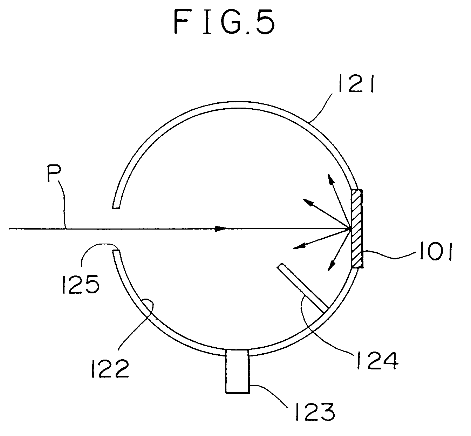

To measure the diffuse reflectance of the reflecting surface 2, a rectangular piece of sample 101 simulating parts of the bottom layer 13, the buffer layer 6, and the reflective layer 7 was prepared. The diffuse reflectance of the sample was measured, using an integrated sphere 121 shown in Fig. 5.

This integrated sphere used to measure the diffuse reflectance is now described briefly with reference to Fig. 5. The sphere 121 is a light-measuring spherical implement having a spherical inner surface 122. A white paint made of magnesium oxide or other material is applied to the spherical inner surface 122 to achieve homogenous diffuse reflection.

The integrated sphere 121 has an opening 125 to introduce straightly propagating reference light P into the sphere. The sample 101 is attached to the spherical inner surface 122 in a position opposite to the opening 125. A detector 123 is attached to the inner surface 122 in a different position. A shield plate 124 extends upright from the straight line connecting the detector 123 and the sample 101, to prevent light reflected by the sample 101 from directly entering the detector 123.

A reference standard reflecting plate was mounted instead of the sample 101. The output value from the detector obtained at this time was taken as 100 % . Then, the diffuse reflectance of the sample was found.

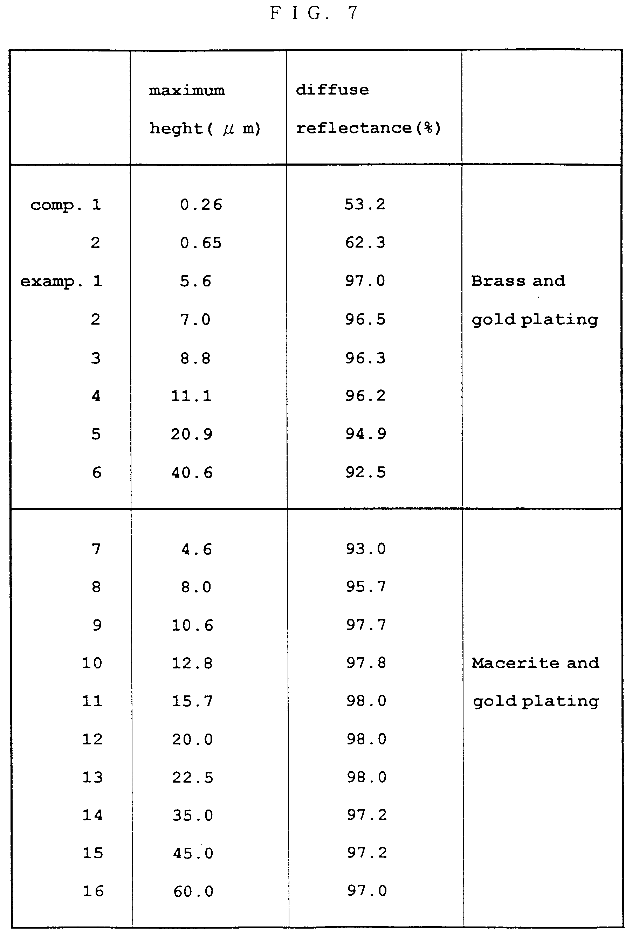

For the diffuse reflecting surface of the configuration of the present Example 1, the surface roughness, or the maximum height, was 10.6 µ m where the bottom layer 13 was sandblasted with a grain size of #180 under a blasting pressure of 2 kg. The diffuse reflectance was 97.7% (see Example 9 in Fig.7).

In the Example 1, the reflective cylinder, or the resonator body 1, was made of brass. The inner brass wall surface of the body 1 was sandblasted, and silver was deposited on the inner wall surface as a reflective layer 7. A surface roughness, or a maximum height, of 5.6 µ m was obtained where the sandblasting operation was carried out with a grain size of #180 under a blasting pressure of 4 kg. A diffuse reflectance of 97 % was obtained.

In the present example, any buffer layer or intermediate layer such as the buffer layer 6 of the other examples was not formed on the bottom layer 13. A buffer layer 6 made of nickel (Ni), copper (Cu), chromium (Cr), titanium (Ti), or other metal may be formed.

The light source and the laser medium used in Example 13 were also used. A reflective cylinder made of Macerite that is a ceramic was used. The Macerite was produced by preparing metal alkoxide as a starting material and depositing fluorine metal mica crystals onto vitreous matrix by the sol-gel process. This Macerite was machined into a form as indicated by numeral 1 in Fig. 1. The inside was sandblasted with a grain size of #100 under a blasting pressure of 2 kg to form a bottom layer 13. An intermediate layer, or a buffer layer 6, made of nickel was formed on the bottom layer 13. The top surface of the buffer layer 6 was plated with gold to form a reflective layer 7. At this time, the maximum height was 22.5 µ m . The obtained diffuse reflectance was 98 % .

In this way, in the present example, a freecutting ceramic can be used to obtain a rough surface. This ceramic is easier to machine than other ceramic materials.

In the present example, a xenon-flash lamp is used as an irradiating lamp 3. Light 11 emitted by this irradiating lamp 3 enters a laser medium 4 directly or via a reflecting surface 2 of the reflective cylinder. The laser medium 4 consists of Nd:YAG.

Where the light 11 emitted by the irradiating lamp 3 is reflected by the reflecting surface 2, this surface 2 is made rough to form a diffuse reflecting surface, as shown in Fig. 3. The light 11 is reflected diffusely, i.e., reflected in random directions. The diffused light, indicated by numeral 12, is repeatedly reflected diffusely by the reflecting surface 2, whereby the light is diffused further. As a result, the amount of light is made uniform over the whole cross section of the reflective cylinder. In this way, the intensity of the irradiating light impinging on the laser medium 4 has a uniform distribution.

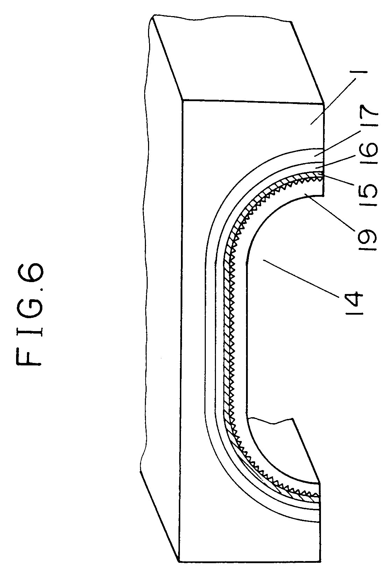

In the example17, a hollow body 19 is fitted in a resonator body 1 made of brass, as shown in Fig. 6. The cross section of this hollow body comprises a pair of semicircular portions disposed in a substantially diametrically opposite relation to each other and straight line portions connecting the semicircular portions. The hollow body 19 has a rough outer surface. A metal layer 15 of silver is formed on the rough surface by plating. A silicone-modified organic-inorganic composite material 16 is applied to the outer surface of the metal layer 15 to protect the silver. A silicone resin polymer 17 is deposited as an adhesive between the composite material 16 and the inner wall surface of the resonator body 1.

Fabrication of this resonator structure is initiated with preparing the hollow body 19 consisting of a quartz glass containing 2000 ppm of Ce. The outer surface of the hollow body 19 is sandblasted with a grain size of #600 under a blasting pressure of 4 kg to make the outer surface a desired rough surface.

Then, the rough surface is plated with silver to form the metal layer 15. To protect this metal layer 15, the aforementioned siliconemodified organic-inorganic composite material 16 is applied to the metal layer 15. The hollow body 19 having the outer surface processed in this way is fitted into the cavity of the resonator body 1 made of brass. The silicone resin polymer 17 has been previously applied to the inner wall surface of the cavity to increase the adhesiveness. An irradiating lamp and a laser medium (none of which are shown in Fig. 6) are accommodated in the space inside the hollow body 19.

In the present example, the irradiating light passes through the hollow body 19 made of glass and is reflected diffusely by the metal layer 15 of silver formed on the rough outer surface. The light then passes through the glass portion of the hollow body 19 and goes back to the inside of the hollow body, where the light is irradiated onto the laser rod. Since the glass portion of the hollow body 19 contains Ce, the glass portion absorbs short wavelength part of the irradiating light. In this way, the thermal load can be reduced.

In the present example, the metal layer 15 of silver does not make contact with cooling water for cooling the irradiating lamp and the laser rod and so the durability of the metal layer 15 is improved greatly. The cooling water is circulated through the hollow body 19.

The values of diffuse reflectances in the other examples and the comparisons based on Fig.4 is shown in Fig.7.

## Claims

1. A solid-state laser device comprising:
a resonator body having a cavity which has an inner wall surface;
an irradiating lamp disposed inside said cavity of said resonator body and emitting irradiating light;
a laser medium disposed inside said cavity and excited by said irradiating light; and
a reflecting surface formed on said inner wall surface of said cavity to reflect said irradiating light, said reflecting surface being a rough surface having a maximum height of at least 3 µ m .

2. The solid-state laser device of claim 1, wherein said reflecting surface is a rough surface having a maximum height between 3 and 200 µ m .

3. The solid-state laser device of claim 1, wherein a reflective layer made of at least one of gold and silver is formed on said reflecting surface.

4. The solid-state laser device of any one of claims 1-3, wherein said inner wall surface of said cavity has a bottom layer made of a ceramic.

5. The solid-state laser device of any one of claims 1-3, wherein said inner wall surface of said cavity has a bottom layer made of a metal.

6. The solid-state laser device of claim 1, further comprising:
a buffer layer made of a metal and formed on bottom layer that is the resonator body; and
a reflective layer made of gold or silver and formed on top of said buffer layer.

7. A solid-state laser device comprising:
a resonator body having a cavity which has an inner wall surface;
an irradiating lamp disposed inside said cavity of said resonator body and emitting irradiating light;
a laser medium disposed inside said cavity and excited by said irradiating light;
a transparent hollow body mounted inside said cavity and having an outer surface, said irradiating lamp and said laser medium being accommodated inside said hollow body;
a rough surface having a maximum height exceeding 3 µ m and formed on said outer surface of said hollow body; and
a metal layer made of gold or silver being formed on said rough surface.

8. The solid-state laser device of claim 7, wherein a synthetic resin is deposited between said inner wall surface of said cavity and said metal layer on said hollow body.

9. The solid-state laser device of claim 7, wherein said hollow body is made of a material which absorbs short wavelength part of said irradiating light.

10. The solid-state laser device of claim 9, wherein said hollow body is made of a quartz glass containing Ce.
